# EUROPEAN PATENT APPLICATION

(11) **EP 1 676 909 A1**
(43) Date of publication of application: **05.07.2006**
(21) Application number: 04791938.6
(22) Date of filing: 01.10.2004
(51) Int. Cl.: C12N 5/06

(54) **METHOD OF MUCUS REMOVAL AND, USED THEREIN, CELL TREATMENT FLUID AND STORAGE FLUID**

(30) Priority: 07.10.2003 JP 2003348073
(71) Applicant: SYSMEX CORPORATION, Kobe-shi, Hyogo 651-0073 (JP)
(72) Inventor: NAKANO, Koichi, c/o Sysmex Corporation, Kobe-shi, Hyogo 6510073 (JP); UMETSU, Ayako, Akita 0170046 (JP); OOI, Yuko, Yokohama-shi, Kanagawa 241-0817 (JP)
(74) Representative: HOFFMANN EITLE
(86) International application number: PCT/JP2004/014471
(87) International publication number: WO 2005/035736

(57) **Abstract**

Mucus can be removed from cell surfaces so as to enable immunochemical labeling by bringing a cell treatment solution containing cysteine and/or a compound derived therefrom in an amount of 5 mass% or more into contact with a cell specimen containing mucus producing cells, such as uterine cervix cells. The cell preservative solution or an aqueous solution containing 30 to 60 mass% alcohol and 5 mass% or more cysteine and/or a compound derived therefrom can store cells while maintaining the state of cell dispersion without any effect on cell morphology during the period from specimen collection to analysis.

## Description

### Technical Field

The present invention relates to methods for removing excess mucus attached to cell surfaces and clusters of cells that are adhered together by mucus, such as clusters of cells collected from the body, especially uterine cervix; cell treatment solutions used in said method; and preservative solutions which allow cells to be preserved in a condition with mucus being removed, without affecting the morphology of cells.

### Background Art

As a screening method for early detection of cervical adenocarcinoma, cytodiagnosis is utilized effectively in medical examinations.

Cytodiagnosis for cervical adenocarcinoma is performed by scraping cells from cervical surface with a cotton swab or a scraper, etc., immediately smearing the scraped cells on a slide glass to prepare a sample and observing the sample under a microscope or the like. In medical institutions where it is necessary to treat a large amount of samples in medical examinations, cell populations collected by scrape are generally preserved in preservative solutions containing alcohol (e.g. patent reference 1) and transferred to laboratories where cells are smeared on slide glasses for Papanicolaou staining, followed by microscopic examination. Then, the presence of cancer cells is determined by morphology of clusters of cells.

In either way, a lot of time and handling processes are required to prepare smears for each sample and to examine them under microscopes. Therefore, the demand for automation of cytodiagnosis has increased in recent years. The methods for automation of cytodiagnosis include flow cytometry which uses immunocytochemistry. In the immunocytochemistry-based flow cytometry, distribution of size, DNA content and expression level of membrane antigens of individual cells in a cell population are determined by staining a protein marker expressed by cells with a fluorescent-labeled antibody, suspending cells in a liquid and irradiate the suspension with laser light and measuring fluorescent light emitted by individual cells. The presence and the amount of cancer cells can also be determined by using a specific antibody for cancer cells to be detected. To increase the accuracy of determination in automation of cytodiagnosis, individual cell must be stained with its antibody specifically.

Cells collected by scraping uterine cervix consist of two kinds of cells, squamous cells and glandular cells, and most of the cells collected are squamous cells. Uterine corpus at the back of the cervix is mainly comprised of glandular cells that secrete mucus, therefore, cells collected from uterine cervix are in a condition of aggregation covered with mucus produced in uterine corpus. Such cellular specimens in which cells are aggregated with glue of mucus can not be directly analyzed on flow cytometer. Moreover, in performing antibody staining, an antibody is absorbed nonspecifically to components of mucus, which results in developing detection noise, therefore accurate cytodiagnosis can not be expected. It is required that mucus which glues cells together is removed and cells are separated to individual cells, and then mucus on the cell surfaces is removed to enable specific reaction with a labeled antibody.

A method to remove mucus for cytodiagnosis is described in the patent reference 2. In the method, mucus is dissolved and cells are dispersed by adding a sputum specimen into 30% ethanol - PBS solution containing 0.1 to 0.2% methyl cysteine for reaction. In a sputum specimen, cells exfoliated from lung are suspended in a viscous fluid, therefore individual cells can be obtained by dissolving mucus in sputum. However, in a case of clusters of cells aggregated with mucus like glue, such as the cell populations derived from uterine cervix, mucus can not be dissolved sufficiently even with the above-mentioned mucus dissolving solution, and there still remains some noise produced by nonspecific absorption of antibodies. Furthermore, it is not possible to disperse cells so that they can be analyzed by flow cytometry.

On the other hand, a cell preservative solution described in the patent reference 1 (U.S. Pat. No. 5,256,571) comprises a chelating agent, such as ethylenediamine tetraacetic acid (EDTA) in alcohol. A chelating agent is said to have an effect on preventing cells from clumping. However, even if a cellular specimen where cells are aggregated with glue of mucus, such as the one from uterine cervix is preserved in the above preservative solution, cells can not be separated and mucus can not be dissolved. Consequently, it fails to decrease nonspecific absorption of a labeled antibody.

The patent reference 2 (JP Unexamined Patent Publication No. Hei 10-323183) discloses a liquid for protecting cells, which is used as a tissue-washing liquid, an artificial cerebrospinal fluid, an intraocular perfusate, etc. This cell-protecting liquid comprises an electrolyte solution containing N-acetylcysteine and/or N- diacetylcystine at concentrations of 0.1 to 10 mM (about 0.0016% to 0.16%).

A cell fixation and preservation solution comprising 0.1 to 0.2 mass% of methyl cysteine as a mucus dissolving agent is disclosed in the patent reference 3 (JP Examined Patent Publication No. Hei 7-46101) and a cell fixation and preservation solution comprising 0.1 to 0.2 mass% of methyl cysteine as a mucus dissolving agent in a buffer solution comprising ethanol, sodium chloride, sucrose or propylene glycol is disclosed in the patent reference 4 (JP Examined Patent Publication No. Hei 7-46100).

However, any one of preservative solutions for cells disclosed can not sufficiently dissolve mucus in the clusters of cells attached together with mucus, such as cell populations collected by scraping uterine cervix, and as a result, individual cells can not be dispersed and nonspecific absorption of mucus to labeled antibodies can not be avoided.

Patent reference 1: U.S. Pat. No. 5,256,571
Patent reference 2: JP Unexamined Patent Publication No. Hei 10-323183
Patent reference 3: JP Examined Patent Publication No. Hei 7-46101
Patent reference 4: JP Examined Patent Publication No. Hei 7-46100

### Disclosure of the Invention

### Problems to be resolved by the invention

The present invention was made in view of the circumstances described above, and an object of the present invention is to provide methods to remove mucus on surface of cells in cellular specimens containing mucus producing cells, such as cellular specimens derived from uterine cervix, so as to enable immunochemical labeling and also analysis by flow cytometry in which individual cells have to be dispersed, as well as cell preservative solutions which can preserve cells while maintaining cells being dispersed without any effect on the morphology of cells during the period from specimen collection till analysis.

### Means of Solving the Problems

A cell treatment solution of the present invention is a treatment solution for removing mucus from clusters of cells adhered by mucus containing mucus producing cells. The cell treatment solution comprises cysteine and/or a compound derived therefrom in an amount of 5 mass% or more. The cell treatment solution according to the present invention is a treatment solution for typically removing mucus from clusters of cells adhered by mucus containing uterin cervix cells.

The solvent of the cell treatment solution is preferably at least one selected from the group consisting of water, physiological saline, and a buffer solution having pH between 4 and 7.

A preservative solution of the present invention is a preservative solution for removing mucus from clusters of cells adhered by mucus containing uterine crevix cells. The preferable preservative solution is an aqueous solution comprising alcohol in an amount of 30 to 60 mass%, and cysteine and/or a compound derived therefrom in an amount of 5 mass% or more.

A method of removing mucus from surfaces of cells of the present invention comprises a step of contacting clusters of cells containing mucus producing cells adhered by mucus with the cell treatment solution of said present invention.

A method of removing mucus of the present invention comprises steps of contacting clusters of cells adhered by mucus containing uterine cervix cells with the cell treatment solution of said present invention to dissolve the mucus, separating cells thus treated from the solution containing the dissolved mucus, and washing the cells separated.

### Effect of the Invention

The cell treatment solution of the present invention can remove mucus in cell populations, which are aggregated with mucus as glue, such as cell populations scraped from uterine cervix without any effect on the morphology of cells.

Accordingly, the mucus removing method of the present invention using the cell treatment solution of the present invention can be utilized for cell populations aggregated with mucus in the pretreatment for cytodiagnosis in which individual cells are examined, such as flow cytometry.

Moreover, the cell preservative solution of the present invention can remove excess mucus during cell preservation and does not have an effect on the morphology of cells in the period of preservation for about 3 weeks. Therefore, the solution of the present invention is effective as a cell preservative solution for cells aggregated with mucus.

### Brief Description of the Drawings

Fig. 1 is a micrograph (×100) of a clinical specimen for cytodiagnosis (Sample A), which was treated with a treatment solution containing 0% AcCys.
Fig. 2 is a micrograph (×100) of a clinical specimen for cytodiagnosis (Sample B), which was treated with a treatment solution containing 0.625 mass% AcCys.
Fig. 3 is a micrograph (×100) of a clinical specimen for cytodiagnosis (Sample C), which was treated with a treatment solution containing 1.25 mass% AcCys.
Fig. 4 is a micrograph (×100) of a clinical specimen for cytodiagnosis (Sample D), which was treated with a treatment solution containing 2.5 mass% AcCys.
Fig. 5 is a micrograph (× 100) of a clinical specimen for cytodiagnosis (Sample E), which was treated with a treatment solution containing 5 mass% AcCys.
Fig. 6 is a micrograph (×100) of a clinical specimen for cytodiagnosis (Sample F), which was treated with a treatment solution containing 5 mass% AcCys for 24 hours.
Fig. 7 is a micrograph (×400) of a specimen after cells treated with a treatment solution without AcCys were labeled with a fluorescent antibody.
Fig. 8 is a micrograph (×400) of a specimen after cells treated with a treatment solution containing 5 mass% AcCys were labeled with a fluorescent antibody.
Fig. 9 is a micrograph (x 100) of a clinical specimen for cytodiagnosis, which was treated with a treatment solution containing 5 mass% L-cysteine for 1 minute.
Fig. 10 is a micrograph (× 100) of a clinical specimen for cytodiagnosis, which was treated with a treatment solution containing 5 mass% L-cysteine for 5 minutes.
Fig. 11 is a micrograph (× 100) of a clinical specimen for cytodiagnosis, which was treated with a treatment solution containing 10 mass% L-cysteine for 1 minute.
Fig. 12 is a micrograph (×100) of a clinical specimen for cytodiagnosis, which was treated with a treatment solution containing 10 mass% L-cysteine for 5 minutes.
Fig. 13 is a micrograph (× 100) of a clinical specimen for cytodiagnosis, which was treated with a treatment solution containing 20 mass% L-cysteine for 1 minute.
Fig. 14 is a micrograph (×100) of a clinical specimen for cytodiagnosis, which was treated with a treatment solution containing 20 mass% L-cysteine for 5 minutes.
Fig. 15 is a micrograph (×100) of a clinical specimen for cytodiagnosis after preserved for 1 week.
Fig. 16 is a micrograph (×100) of a clinical specimen for cytodiagnosis after preserved for 3 weeks.
Fig. 17 is a micrograph (×100) of a clinical specimen for cytodiagnosis after preserved in a conventional preservative solution for 3 weeks.

### Best Mode for Carrying Out the Invention

At first, the cell treatment solution of the present invention is described in the below.
The specimens to which the cell treatment solution of the present invention is applicable are clusters of cells attached by mucus, comprising mucus producing cells, and more specifically, cell populations aggregated with mucus as glue, such as cell populations comprising uterine cervix cells collected by scraping. In the case of uterine cervix, glandular cells constituting uterine corpus are mucus producing cells, and therefore cell populations are in the condition of aggregation by mucus secreted.

For the method of scraping, conventional methods used generally in medical examinations, etc. are applicable. Specifically, methods using a cotton swab, a rubber spatula or a wooden scraper are included.

The cell treatment solution of the present invention contains cysteine and/or a compound derived therefrom at concentrations of 5 mass% or more, preferably 10 mass% or more. When the solution contains under 5 mass% cysteine, it can not sufficiently remove mucus attached in the cell populations aggregated with mucus, such as those derived from uterine cervix, and consequently mucus remains on cell surfaces and nonspecific absorption of labeled antibody can not be reduced. While there is no particular upper limit, it is recognized that about 20 mass% is still within the appropriate concentration in view of easiness of handling and so on.

The solvent for a cell treating solution may be any solvent which does not react with cysteine and/or a compound derived therefrom, and it can be water, saline, buffer solution such as PBS (phosphate buffered saline) and Tris. 30 to 60 mass% aqueous alcohols may also be used as a solvent. Examples of such alcohols include, but are not limited to, methanol, ethanol, isopropanol, and the like.

Examples of cysteine and/or a compound derived therefrom used in the present invention include methyl cysteine, acetyl cysteine, L-cysteine and the like. As described below, since an object of the cell treatment solution according to the present invention is to remove mucus for preparing cellular specimen as can be analyzed by flow cytometry using immunocytochemistry, it is not necessary to consider the reaction with hematoporphyrin which is an ingredient of DNA fluorescent stain as described, for example, in the column 5 in JP Examined Patent Publication No. Hei 7-46101, and therefore, acetyl cysteine can be used.

Cysteine and/or a compound derived therefrom dissolve mucus by breaking disulfide bonds (S-S bonds) of mucoproteins constituting mucus, loosening those secondary structures and reducing the viscosity of mucus.

The method of removing mucus according to the present invention is described below.
The method of the present invention for removing mucus comprises a step of contacting the above cell treatment solution of the present invention with cell populations aggregated with mucus.

The condition of the reaction with the treatment solution is not particularly limited, and so the reaction can be performed in the condition in which cells are not affected. In particular, the reaction is preferably carried out at room temperature and the reaction time is preferably one minute or more.
After the reaction is finished, cells are collected and washed, and then a suitable specimen for cytodiagnosis can be obtained. '

Cells are collected, for example, by centrifuging a suspension obtained after cell treatment and separating cells. Cells are washed by repeatedly performing a procedure of suspending cells in a buffer solution such as PBS, separating cells and removing supernatant.

By providing fluorescent antibody staining to a cellular specimen after removing mucus, nonspecific absorption of a labeled antibody due to the mucus attached on cell surfaces can be reduced, and only the target cells can be fluorescent-labeled. Consequently, the detection noise observed in flow cytometry can be reduced.

When a specimen is to be analyzed in flow cytometry, fluorescent antibody staining is performed. Alternatively, Giemsa staining or Papanicolaou staining can be used when a smear is prepared from a specimen for morphologic examination.

The cell preservative solution of the present invention is described below. The cell preservative solution of the present invention is preferably an aqueous solution containing 30 to 60 mass% alcohol and 5 mass% or more cysteine and/or a compound derived therefrom.

Examples of alcohols include lower alcohols such as methanol, ethanol, propanol and isopropanol.
When alcohol content is less than 30 mass%, cells can not be stored for a long time, and when alcohol content is over 60 mass%, in spite that mucus is removed, cells are aggregated and a problem occurs in the application of flow cytometry.

Cysteine and/or a compound derived therefrom as used for the cell treatment solution of the present invention described above may be used for cysteine and/or a compound derived therefrom in the cell preservative solution.

The concentrations of cysteine and/or a compound derived therefrom should be 5 mass% or more, because mucus can not be sufficiently removed from cell populations aggregated with mucus derived from uterine cervix, etc. with the solution containing less than 5 mass% cysteine and/or a compound derived therefrom. On the other hand, even if the solution contains cysteine and/or a compound derived therefrom at higher concentrations, it does not affect the morphology of cells in a specimen and it can serve the purpose of the cell preservative solution.

The cell preservative solution may include alcohols, cysteine and/or a compound derived therefrom and also appropriate buffer solutions to adjust pH and chelating agents.

The cell preservative solution comprising the above ingredients is suitable for preserving cell populations such as those collected by scraping the surface of uterine cervix, i.e. cell populations aggregated with mucus.

The cell preservative solution of the present invention has an effect of removing mucus of cell populations aggregated with mucus, so that there is a condition to prevent aggregation of cells by removing extra mucus during the time when a specimen derived from the body is transported to a laboratory and is subjected to an examination. In addition, the preservative solution of the present invention does not affect the morphology of cells in the preservation period of about 3 weeks, while specimens are preserved from being collected at hospitals, etc. till provided for actual examinations for about 3 weeks at longest.

Accordingly, if cell populations collected are preserved in the cell preservative solution of the present invention, they can be provided for antibody staining using immunocytochemistry without any special processing. Moreover, the preservative solution of the present invention is useful as a cell preservative solution for an examination in which morphology of individual cell is observed, such as flow cytometry, because it does not affect the morphology of individual cells in a period of preservation. The examination is not limited to flow cytometry, and the preservative solution of the present invention is also suitable as a preservative solution used when cells are provided for other examinations by conventional smear preparation and microscopic observation.

### EXAMPLES

### [Effect of removing mucus in clinical specimens of uterine cervix for cytodiagnosis.]

Cell populations in a clinical specimen derived from uterine cervix which had been stored in 30 to 60 mass% methanol-based, buffered preservative solution (PreservCyt® manufactured by Cytyc Corporation) was transferred to a 1.5 ml centrifuge tube (about 1 x 10⁵ cells/sample).

The solution was centrifuged (10000 rpm; 1 minute; 4°C) to separate cells, and the supernatant was removed.
To the cells thus collected was added 1 ml of a mixture (hereinafter referred to as PBS-T) of 0.1% Tween 20 (Sigma) and 0.01M phosphate buffer (PBS available from Sigma; pH7.4) and the cells were resuspended.

The cells were washed by another centrifugation (10000 rpm, 1 minute, 4°C) for cell separation, removal of the supernatant and cell collection. The cells washed were resuspended in 500 µl of the preservative solution.

10 mass% aqueous solution of N-acetyl-L-cysteine (hereinafter referred to as AcCys) was prepared for a cell treatment solution. This cell treatment solution was added to the cell suspension obtained from the above, and samples of B to E were prepared so that the AcCys concentrations in the samples were 0.625 mass%, 1.25 mass% or 5 mass%. For comparison, sample A was prepared with a treatment solution which does not contain AcCys.

After each sample was reacted at room temperature for 1 minute, the reaction was stopped by adding an additional 500 µl of a preservative solution PreservCyt and decreasing the AcCys concentration. The solution obtained after the reaction was finished was then centrifuged (10000 rpm; 1 minute; 4°C) to separate cells, and the supernatant was removed and cells were collected.

The cells were washed by resuspension in 1 ml of PBS-T, another centrifugation (10000 rpm; 1 minute, 4°C) for cell separation, and removal of the supernatant. This washing procedure was repeated two times.

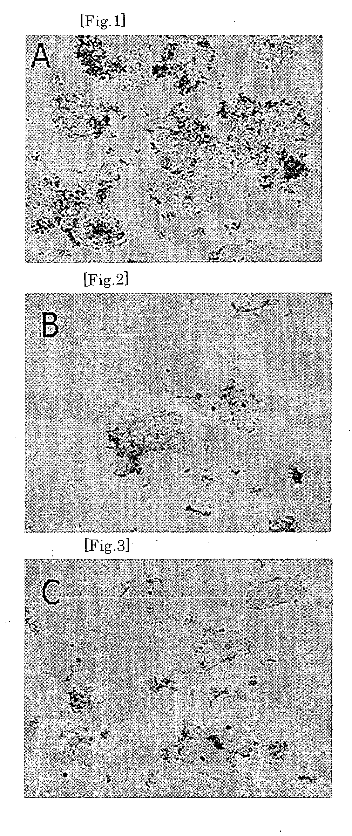

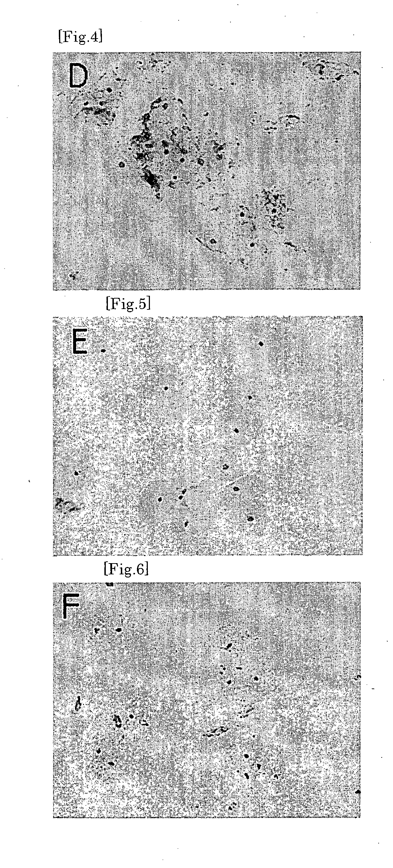

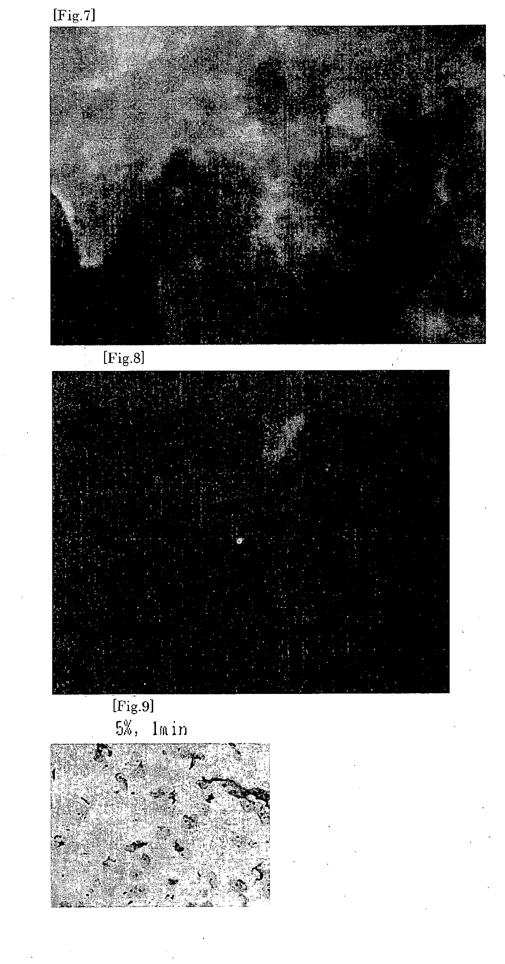

The cells collected were suspended in 300 µl of 100% methanol and mounted on a glass slide by using Cytospin. Then, cells on the slide were stained with 5% Giemsa Stain Solution (Sysmex) for 15 minutes, washed thoroughly with PBS, and observed under a light microscope to give micrographs of Fig. 1 to 5 for each sample of A to E.
Sample F was also prepared by adding AcCys so that its concentration became 5 mass%, the same procedure was carried out except for the reaction time changed to 24 hours, and the cells obtained were stained in the same manner and observed. The micrograph is shown in Fig. 6.

When the cell treatment solutions containing AcCys at concentrations under 5 mass% were used for reactions (Samples A to D), there remained black clumps which showed mucus part. However, when treated with the cell treatment solutions containing AcCys at concentrations of 5 mass% or more (Sample E and F), black clumps showing mucus part were disappeared, which revealed that mucus was dissolved.

Squamous cells which were not treated with AcCys and squamous cells which were treated with 5 mass% AcCys were stained with a fluorescent-labeled anti-NMP179 antibody which reacts with cells derived from uterine cervix except for normal uterine cervix squamous cells, and observed under a microscope to give each result of fluorescent image in Fig. 7 and Fig. 8.

When cells were untreated (Fig. 7), fluorescence spread over the field (the white part showed fluorescence), and it was understood that anti-NMP179 antibody bound with the cells nonspecifically. On the other hand, in Fig. 8, fluorescent part was found only in the white part in the center, which revealed specific staining.

### [Effect of the cell treatment solution on cell morphology]

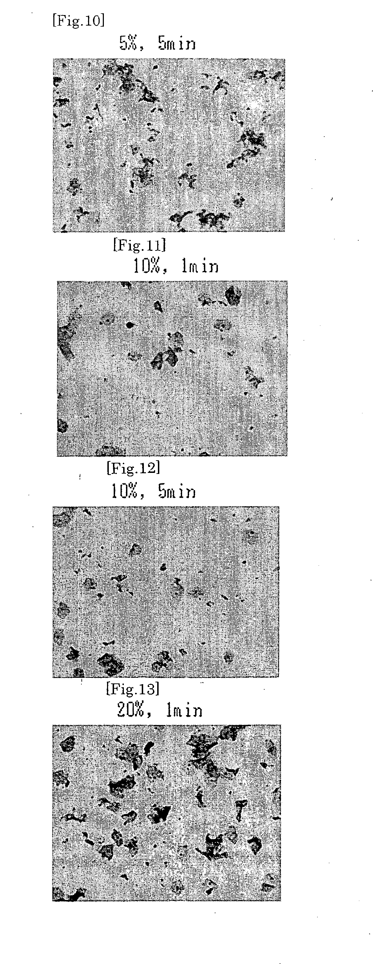

The cell treatment solutions containing L-cysteine at concentrations of 5 mass%, 10 mass% and 20 mass% were used to treat cell populations of clinical specimen for 1 minute or 5 minutes in the same manner of the above, and the cells were observed. The results of each sample treated with the solutions containing 5 mass%, 10 mass% and 20 mass% L-cysteine for 1 minute and 5 minutes were shown in Fig. 9 to Fig. 14. It revealed that the treatment for 5 minutes by each cell treatment solution with different concentrations of L-cysteine did not affect the cell morphology in comparison with the treatment for 1 minute.

### [Effect of the cell preservative solution on cell morphology]

Uterine cervix cell populations of clinical specimen which had been fixed and stored in a preservative solution (PreservCyt® manufactured by Cytyc Corporation) were collected in a 1.5 ml centrifuge tube (about 1 × 10⁵ cells/sample).

500 µl of the cell preservative solution containing 10 mass% AcCys in 50 mass% alcohol as a solvent was added to the above cell populations and stored at room temperature for 3 weeks.

The cell preservative solution containing cells was centrifuged (3500 rpm; 1 minute; 4°C) to separate cells and the supernatant was removed. To the cells obtained was added 1 ml of PBS-T for resuspending the cells. The cells were washed by another centrifugation (10000 rpm; 1 minute; 4°C) for separating the cells and removing the supernatant. The cells washed were resuspended in 500 µl of the preservative solution, and another 500 µl of the preservative solution was added, cells were collected by centrifuging (10000 rpm; 1 minute; 4°C) and removing the supernatant. The cells collected were washed twice by adding 1 ml of PBS-T for resuspension, centrifuging (10000 rpm; 1 minute; 4°C) and removing the supernatant.

The cells washed were suspended in 300 µl of 100% methanol and mounted on a glass slide by using Cytospin. Then, it was stained with 5% Giemsa Stain Solution (Sysmex) for 15 minutes, followed by washing thoroughly with PBS, and observed under a light microscope.

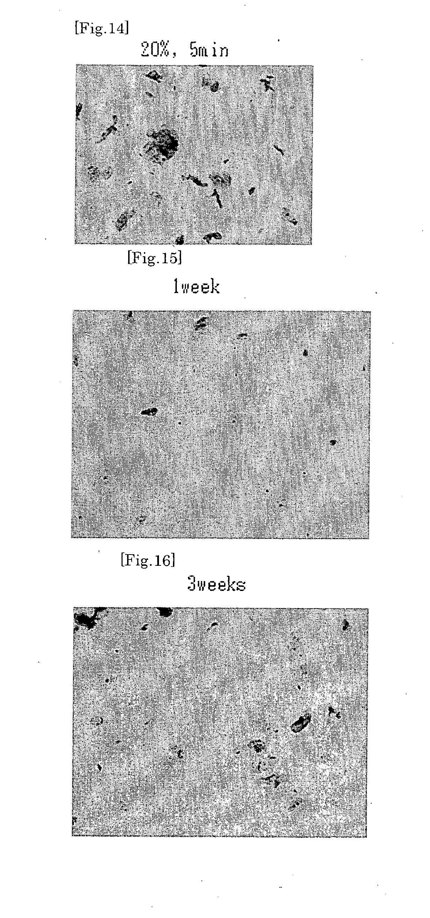

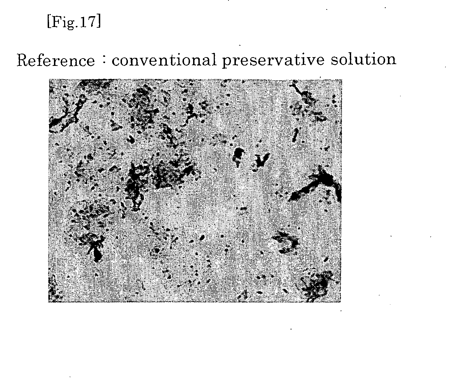

The results observed for the condition of cells after 1 week or 3 weeks of preservation are shown in Fig. 15 and 16. For reference, the result observed for the cells after 3 weeks of preservation in a preservative solution sold by Cytyc (without AcCys) is shown in Fig. 17.

When preserved in a conventional preservative solution (Fig. 17), mucus clumps were observed and cells were found clustered. On the other hand, in the specimens stored in the preservative solution of the present invention (Fig. 15 and 16), cells without mucus were found dispersed and the cell morphology was not affected.

### Industrial Applicability

The mucus removing method and the mucus removing solution of the present invention can be utilized as pretreatment tools for cells aggregated with mucus such as those collected by scraping uterine cervix before the cells are subjected to individual cytodiagnosis such as flow cytometry.

The cell preservative solution of the present invention can be utilized as a cell preservative solution to provide suitable cells for flow cytometry or smear preparation without pretreatments such as removing mucus at laboratories.

## Claims

1. A cell treatment solution for removing mucus from clusters of cells adhered by mucus containing mucus producing cells comprising, cysteine and/or a compound derived therefrom in an amount of 5 mass% or more.

2. A cell treatment solution for removing mucus from clusters of cells adhered by mucus containing uterine cervix cells comprising, cysteine and/or a compound derived therefrom in an amount of 5 mass % or more.

3. The cell treatment solution of claim 1, comprising a solvent which is at least one selected from the group consisting of water, physiological saline, and buffer solution having pH between 4 and 7.

4. The cell treatment solution of claim 2, comprising a solvent which is at least one selected from the group consisting of water, physiological saline, and buffer solution having pH between 4 and 7.

5. A preservative aqueous solution for preserving clusters of cells adhered by mucus containing mucus producing cells comprising, alcohol in an amount of 30 to 60 mass%, and cysteine and/or a compound derived therefrom in an amount of 5 mass % or more.

6. A method of removing mucus from surfaces of cells comprising a step of contacting clusters of cells adhered by mucus containing uterine cervix cells with a preservative solution containing cysteine and/or a compound derived therefrom in an amount of 5 mass% or more.

7. A method of removing mucus comprising the steps of:
contacting clusters of cells adhered by mucus containing uterine cervix cells with a cell treatment solution containing cysteine and/or a compound derived therefrom in an amount of 5 mass% or more to dissolve the mucus;
separating cells thus treated from the solution containing the dissolved mucus; and washing the cells separated.
